# EUROPEAN PATENT APPLICATION

(11) **EP 4 650 328 A1**
(43) Date of publication of application: **19.11.2025**
(21) Application number: 23916301.7
(22) Date of filing: 27.12.2023
(51) Int. Cl.: C03B 5/16, C03B 5/03

(54) **METHOD FOR PRODUCING GLASS ARTICLE**

(30) Priority: 10.01.2023 JP 2023001680
(71) Applicant: Nippon Electric Glass Co., Ltd., Otsu-shi, Shiga 520-8639 (JP)
(72) Inventor: ITAZU, Hiroyuki, Otsu-shi, Shiga 520-8639 (JP)
(74) Representative: Tetzner, Michael
(86) International application number: PCT/JP2023/047015
(87) International publication number: WO 2024/150688

(57) **Abstract**

Provided is a manufacturing method for a glass article, the manufacturing method including a melting step (S1) of generating a molten glass by heating and melting glass raw materials (Gr) corresponding to raw materials for a glass article, in a melting furnace (10). In the melting step (S1), the glass raw materials (Gr) are heated and molten through combustion of fuel (FH) containing hydrogen and with electrodes (38) arranged in the melting furnace (10), and a water vapor partial pressure (Pp) in the melting furnace (10) is set to more than 80% of a total atmospheric pressure (Pt).

## Description

### Technical Field

The present invention relates to a manufacturing method for a glass article.

### Background Art

A manufacturing process for a glass article includes a melting step of heating and melting glass raw materials in a melting furnace. In the melting step, a method of heating and melting glass raw materials in a melting furnace by using a burner that burns fuel to form a flame has been widely used (for example, Patent Literature 1). As the fuel, a hydrocarbon fuel such as a natural gas is generally used. Further, in some cases, combustion heating with a burner and electric heating with an electrode are both performed in the melting step.

### Citation List

Patent Literature 1: WO 2011/136086 A

### Summary of Invention

### Technical Problem

However, when the hydrocarbon fuel is used as the fuel to be supplied to the burner, carbon dioxide contained in an exhaust gas generated in the melting step increases. As a result, there arises a problem in that an environmental load increases.

Thus, it is conceivable to use, for example, a hydrogen fuel as the fuel to be supplied to the burner. When the hydrogen fuel is burned to form a flame, water is generated as a main product. Hence, it is expected that carbon dioxide contained in an exhaust gas is significantly reduced. Meanwhile, for this kind of melting step, a reduction in fuel usage amount (combustion amount) has been required in terms of a reduction in the amount of exhaust gas itself, energy saving, and facility protection.

In view of the circumstances described above, a technical object to be achieved by the present invention is to reduce carbon dioxide contained in an exhaust gas generated in a melting step and also to reduce the combustion amount.

### Solution to Problem

The above-mentioned object is achieved by the following manufacturing method for a glass article according to the present invention.
(1) Provided is a manufacturing method for a glass article, comprising a melting step of generating a molten glass by heating and melting glass raw materials corresponding to raw materials for a glass article in a melting furnace. In the melting step, the glass raw materials are heated and molten through combustion of fuel containing hydrogen and with electrodes arranged in the melting furnace, and a water vapor partial pressure in the melting furnace is set to more than 80% of a total atmospheric pressure.

As described above, in the present invention, the glass raw materials are heated and molten through the combustion of the fuel containing hydrogen. Thus, carbon dioxide contained in an exhaust gas generated in the melting step can be reduced. Further, in the present invention, the water vapor partial pressure in the melting furnace is set to more than 80% of the total atmospheric pressure. Combustion of the fuel containing hydrogen generates water. As a result, the water vapor partial pressure in the melting furnace is increased while the amount of air bubbles generated along with the melting of the glass raw materials is increased. Thus, a foam layer formed on a top of the molten glass increases to have an increased thickness dimension. The present invention has been made with a focus on this point. Setting the water vapor partial pressure in the melting furnace to an extremely high level (more than 80% of the total atmospheric pressure) causes the expansion of the foam layer, resulting in a state in which an upper surface of the molten glass is covered with a thick foam layer. The foam layer contains gas and provides high heat insulation action. Thus, heat dissipation from the upper surface of the molten glass can be effectively suppressed by the foam layer. Accordingly, the molten glass can be efficiently heated by electric heating with the electrode. As a result, electricity usage for the electric heating can be reduced.

(2) In the manufacturing method for a glass article according to the above-mentioned item (1), the glass raw materials may contain SO₃ at 200 wtppm or more.

The glass raw materials contain SO₃ in some cases. In the melting step, SO₃ in the glass raw materials is thermally decomposed by heating and generates an SO₂ gas. Bubbles are generated along with the generation of the SO₂ gas. The generated bubbles float up and form the foam layer. As described above, when the glass raw materials contain SO₃, a thickness and an area of the foam layer can be increased. Thus, heat dissipation from the upper surface of the molten glass can be further suppressed.

(3) In the manufacturing method for a glass article according to the above-mentioned item (1) or (2), in the melting step, 80% to 100% of a surface of a molten glass is covered with a batch layer corresponding to the glass raw materials supplied into the melting furnace and a foam layer formed along with heating and melting of the glass raw materials may cover.

As described above, when 80% to 100% of the surface of the molten glass is covered with the batch layer and the foam layer, a heat insulating effect of the batch layer and the foam layer on the molten glass can be effectively exhibited while an effect of the combustion of hydrogen fuel in reducing carbon dioxide is sufficiently enjoyed.

(4) In the manufacturing method for a glass article according to any one of the above-mentioned items (1) to (3), a batch layer corresponding to the glass raw materials supplied into the melting furnace may cover 30% to 70% of a surface of a molten glass.

As described above, when the batch layer covers 30% to 70% of the surface of the molten glass, a heat insulating effect of the batch layer on the molten glass can be effectively exhibited. Thus, a further reduction in the combustion amount can be achieved. Further, with setting of an area to be covered by the batch layer to 70% or less, even when an in-furnace condition has changed due to, for example, a change in flow rate and hence the glass raw materials are more liable to stagnate, feeding of the glass raw materials can be continued by causing the batch layer to flow over a region that has not been covered with the batch layer. Thus, the molten glass can be continuously generated in a stable manner.

(5) In the manufacturing method for a glass article according to any one of the above-mentioned items (1) to (4), a maximum thickness dimension of a foam layer formed along with the heating and melting of the glass raw materials may be set to more than 50 mm.

As described above, when the glass raw materials are heated and molten (in the melting step), setting the thickness dimension of the foam layer formed on the top of the molten glass to more than 50 mm as a maximum allows an effective heat insulating effect of the foam layer to be fully exerted on the molten glass.

### Advantageous Effects of Invention

As described above, according to the present invention, it becomes possible to reduce carbon dioxide contained in an exhaust gas generated in the melting step and also to reduce a combustion amount.

### Brief Description of Drawings

FIG. 1 is a longitudinal sectional view of a melting furnace according to an embodiment of the present invention.
FIG. 2 is a transverse sectional view of the melting furnace taken along the line A-A of FIG. 1.
FIG. 3 is a combustion system diagram of a burner provided to the melting furnace illustrated in FIG. 1.

### Description of Embodiments

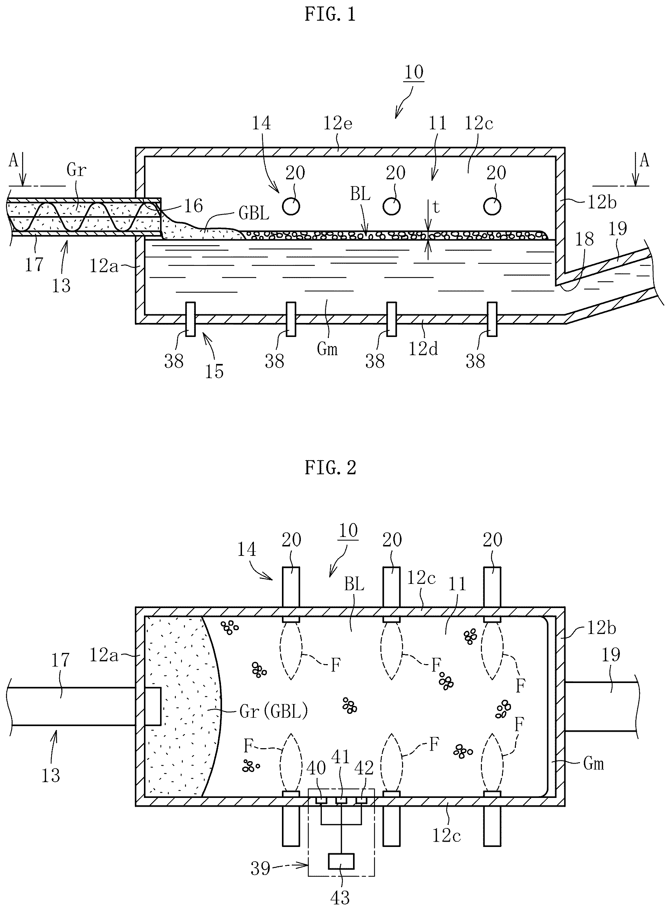

Now, an embodiment of the present invention is described with reference to FIG. 1 to FIG. 3.

A manufacturing apparatus for a glass article according to this embodiment comprises a melting furnace, a fining chamber, a homogenization chamber, and a forming device. The melting furnace is configured to generate a molten glass. In the fining chamber, a fining treatment is performed on the molten glass. In the homogenization chamber, the molten glass, which has been subjected to the fining treatment, is homogenized by stirring or the like. The forming device is configured to form the homogenized molten glass into a predetermined glass article. FIG. 1 is a longitudinal sectional view of a melting furnace 10, which is one element of the manufacturing apparatus. Further, FIG. 2 is a transverse sectional view of the melting furnace 10 illustrated in FIG. 1, which is taken along the line A-A. The manufacturing apparatus having the configuration described above is merely an example, and, for example, a part of the plurality of elements described above may be omitted. Alternatively, the manufacturing apparatus may further comprise elements other than the elements described above.

The melting furnace 10 allows a melting step S1 according to this embodiment to be carried out. The melting furnace 10 is configured to enable generation of a molten glass Gm by melting glass raw materials Gr that are continuously fed into a space (melting space 11) inside the melting furnace 10. More specifically, the melting furnace 10 comprises the melting space 11, a plurality of wall parts 12a to 12e, a raw material supply device 13, and heating devices 14 and 15. The plurality of wall parts 12a to 12e define the melting space 11.

In this case, publicly known raw materials (such as natural raw materials, chemical raw materials, and cullet) can be used as the glass raw materials Gr without any particular limitation.

SO₃ in the glass raw materials contributes to formation of a foam layer, and increases a thickness and an area of the foam layer. Thus, it is preferred that the SO₃ content of the glass raw materials Gr be 200 wtppm or more, more preferably 300 wtppm or more, still more preferably 500 wtppm or more. Meanwhile, it is preferred that an upper limit of the SO₃ content be set to 1,000 wtppm or less.

The wall parts 12a to 12e of the melting furnace 10 are formed of a refractory brick (for example, a zirconia-based electrocast brick, an alumina-based electrocast brick, an alumina-zirconia-based electrocast brick, an AZS (Al-Zr-Si)-based electrocast brick, or a dense fired brick).

A feed port 16 for feeding the glass raw materials Gr is formed in the front wall part 12a of the melting furnace 10. A screw feeder 17 corresponding to the raw material supply device 13 configured to supply the glass raw materials Gr into the space 11 inside the melting furnace 10 is provided to the feed port 16. The raw material supply device 13 may be another publicly known member such as a pusher or a vibrating feeder. The number or positions of arrangement of the raw material supply devices 13 can be appropriately changed depending on, for example, a size of the melting furnace 10.

A discharge port 18 for discharging the molten glass Gm is formed in the rear wall part 12b of the melting furnace 10. A transfer flow passage 19 is connected to the discharge port 18, and the molten glass Gm, which has reached a downstream end of the melting furnace 10, is successively transferred to a subsequent step (for example, a fining step) through the transfer flow passage 19. Although not shown, when glass articles are simultaneously manufactured at a plurality of locations, the melting furnace 10 may have discharge ports 18 formed at a plurality of positions so that the molten glass Gm is transferred to a subsequent step through the transfer flow passages 19 connected to the discharge ports 18 formed at the plurality of positions, respectively.

A plurality of burners 20 serving as the heating device 14 are provided to each of the side wall parts 12c of the melting furnace 10 on both sides. The heating device 14 is configured to burn fuel to form a flame F. The flame F formed by each of the burners 20 heats at least one of the glass raw materials Gr or the molten glass Gm from a position above a liquid surface of the molten glass Gm. The number or positions of arrangement of the burners 20 can be appropriately changed depending on, for example, the size of the melting furnace 10.

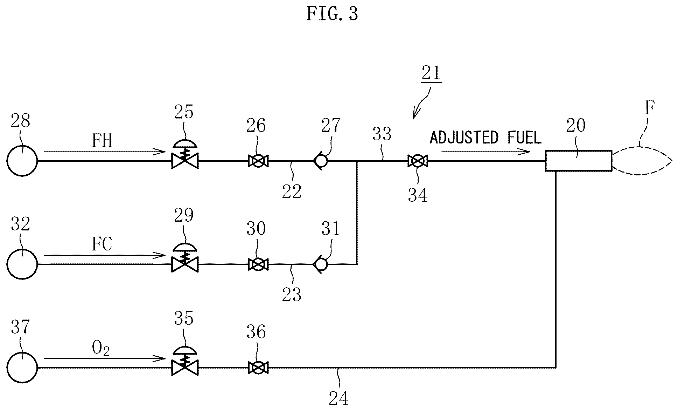

As illustrated in FIG. 3, a fuel supply passage 21 for supplying fuel or the like is connected to each of the burners 20. The fuel supply passage 21 comprises at least a hydrogen fuel pipe 22 for supplying a hydrogen fuel (corresponding to fuel containing hydrogen according to the present invention) FH. In this embodiment, the fuel supply passage 21 further comprises a hydrocarbon fuel pipe 23 for supplying a hydrocarbon fuel FC and a combustion-supporting gas pipe 24 for supplying oxygen serving as a combustion-supporting gas. As a matter of course, only one of the hydrocarbon fuel pipe 23 or the combustion-supporting gas pipe 24 may be provided in addition to the hydrogen fuel pipe 22.

A flow rate adjustment valve 25, a switching valve 26, and a check valve 27 are provided to the hydrogen fuel pipe 22. The flow rate adjustment valve 25 is configured to adjust a flow rate of the hydrogen fuel FH. The switching valve 26 is configured to switch opening and closing of a flow passage for the hydrogen fuel FH flowing at the adjusted flow rate. The check valve 27 is configured to prevent backflow of fuel such as the hydrogen fuel FH. A hydrogen fuel source 28 is connected to an upstream end of the hydrogen fuel pipe 22.

A flow rate adjustment valve 29, a switching valve 30, and a check valve 31 are provided to the hydrocarbon fuel pipe 23. The flow rate adjustment valve 29 is configured to adjust a flow rate of the hydrocarbon fuel FC. The switching valve 30 is configured to switch opening and closing of a flow passage for the hydrocarbon fuel FC flowing at the adjusted flow rate. The check valve 31 is configured to prevent backflow of fuel such as the hydrocarbon fuel FC. A hydrocarbon fuel source 32 is connected to an upstream end of the hydrocarbon fuel pipe 23. For example, butane, propane, a petroleum gas, a natural gas, or the like can be used as the hydrocarbon fuel FC. In view of a further reduction in carbon dioxide contained in the exhaust gas, it is preferred that a natural gas be used as the hydrocarbon fuel FC.

A downstream end of the hydrogen fuel pipe 22 and a downstream end of the hydrocarbon fuel pipe 23 are connected to each other and are connected to the burner 20 through intermediation of a common fuel pipe 33. An adjusted fuel flows through the common fuel pipe 33. The adjusted fuel contains the hydrogen fuel FH and the hydrocarbon fuel FC at a mixing ratio adjusted by the flow rate adjustment valves 25 and 29 and/or the switching valves 26 and 30. A switching valve 34 is provided to the common fuel pipe 33. The switching valve 34 is configured to switch opening and closing of a flow passage for the adjusted fuel.

A flow rate adjustment valve 35 and a switching valve 36 are provided to the combustion-supporting gas pipe 24. The flow rate adjustment valve 35 is configured to adjust a flow rate of oxygen. The switching valve 36 is configured to switch opening and closing of a flow passage for oxygen flowing at the adjusted flow rate. An oxygen source 37 is connected to an upstream end of the combustion-supporting gas pipe 24. The burner 20 is connected to a downstream end of the combustion-supporting gas pipe 24. The supply of oxygen to the burner 20 through the combustion-supporting gas pipe 24 allows mixture of the adjusted fuel with oxygen to make the adjusted fuel more easily combustible. As a result, a temperature of the flame F formed by the burner 20 is easily raised. Air may be used in place of oxygen as the combustion-supporting gas, but in view of setting to a water vapor partial pressure Pp in the melting space 11 to more than 80% of a total atmospheric pressure Pt, it is preferred that oxygen be used as the combustion-supporting gas. Further, when oxygen is used as the combustion-supporting gas, an oxygen concentration can be set to 50 wt% or higher, preferably 70 wt% or higher, more preferably 90 wt% or higher. As the oxygen concentration increases, the water vapor partial pressure Pp in the melting space 11 increases and the fuel becomes more easily combustible. Hence, the temperature of the flame F formed by the burner 20 is easily raised.

It is preferred that each of the burners 20 be a multistage combustion burner. The multistage combustion burner comprises, for example, a main nozzle and a staging nozzle (not shown). The main nozzle is configured to inject a mixed gas of, for example, the fuel and the combustion-supporting gas. The staging nozzle is configured to inject the combustion-supporting gas. The mixed gas injected from the main nozzle is obtained by mixing the fuel and the combustion-supporting gas so that the combustion-supporting gas is insufficient for the fuel. Thus, a large part of the fuel contained in the mixed gas injected from the main nozzle reacts with the combustion-supporting gas contained in the mixed gas and combusts. The remaining fuel reacts with the combustion-supporting gas injected from the staging nozzle and combusts. When the multistage combustion described above is used, the flame becomes longer and a temperature of the flame decreases. As a result, a concentration of nitrogen oxides in the exhaust gas can be reduced.

Further, in this embodiment, a plurality of rod-shaped electrodes 38 corresponding to the heating device 15 are provided to the bottom wall part 12d of the melting furnace 10. The electrodes 38 heat the molten glass Gm through application of a current under a state in which the electrodes 38 are immersed in the molten glass Gm. The number of (one or two or more) electrodes 38 can be appropriately changed depending on, for example, the size or a shape of the melting furnace 10. A shape of each of the electrodes 38 may be any suitable shape, for example, a sheet-like shape. In principle, the electrodes 38 may be arranged in any suitable manner. For example, although not shown, the electrodes 38 may be arranged on lower parts of the side wall parts 12c.

A partial pressure measurement device 39 configured to measure the water vapor partial pressure Pp in the melting space 11 is disposed on the melting furnace 10. The partial pressure measurement device 39 comprises, for example, a pressure gauge 40, a hygrometer 41, a thermometer 42, and a computing device 43. The computing device 43 can calculate the water vapor partial pressure Pp (for example, a ratio to the total atmospheric pressure Pt) in the melting space 11 based on an atmospheric pressure (total atmospheric pressure Pt), a humidity, and a temperature in the melting space 11, which are measured by the pressure gauge 40, the hygrometer 41, and the thermometer 42. In this embodiment, the pressure gauge 40, the hygrometer 41, and the thermometer 42 of the partial pressure measurement device 39, which are disposed on the side wall part 12c of the melting furnace 10, are exemplified (see FIG. 2). However, as a matter of course, a part or all of the pressure gauge 40, the hygrometer 41, and the thermometer 42 may be disposed at another position (for example, on the top wall part 12e or on an upstream side of a gas duct). The water vapor partial pressure Pp may be calculated from a composition of the exhaust gas or a measurement value of, for example, a flow rate of the exhaust gas or a flow rate of the adjusted fuel.

Next, a manufacturing method for a glass article using the manufacturing apparatus having the above-mentioned configuration is described.

The manufacturing method for a glass article according to this embodiment comprises the melting step S1 as described above. The manufacturing method further comprises, as required, a fining step of performing a fining treatment on the molten glass Gm obtained in the melting step S1, a homogenization step of homogenizing, for example, by stirring the molten glass Gm that has undergone the melting step S1, and a forming step of forming the molten glass Gm that has undergone the homogenization step into glass articles.

As illustrated in FIG. 1 and FIG. 2, in the melting step S1, the glass raw materials Gr, which are continuously fed at a constant flow rate into the melting space 11 inside the melting furnace 10, are heated and molten by using the burners 20, each burning the fuel to form the flame F. In this embodiment, in the melting step S1, the glass raw materials Gr are heated through the combustion caused by the burners 20, and the glass raw materials Gr and/or the molten glass Gm is also heated through application of a current with the electrodes 38 in view of improvement in energy efficiency or the like.

Further, at the time of the combustion caused by the burners 20, the hydrogen fuel FH is used as the fuel. A mixed fuel (adjusted fuel) of the hydrogen fuel FH and the hydrocarbon fuel FC may be used. In terms of setting of the water vapor partial pressure Pp in the melting space 11 to more than 80% of the total atmospheric pressure Pt, however, it is preferred that only the hydrogen fuel FH be used as the fuel without being mixed with the hydrocarbon fuel FC.

Further, in terms of setting of the water vapor partial pressure Pp in the melting space 11 to more than 80% of the total atmospheric pressure Pt, it is preferred that a pressure H1 in the melting space 11 be set higher than a pressure H2 in a space outside the melting furnace 10, that is, a positive pressure be created in the melting space 11. A pressure difference (H1-H2) can be set to, for example, from 10 Pa to 100 Pa. When a positive pressure is created in the melting space 11, a decrease in the water vapor partial pressure Pp in the melting space 11, which is caused by ingress of an atmosphere (for example, an atmospheric air) outside the melting furnace 10 into the melting space 11, can be suppressed. The pressure H1 in the melting space 11 can be adjusted by changing the flow rate of the exhaust gas, more specifically, by changing an opening degree of a damper or an rpm of an air blower in a flue or an exhaust gas treatment facility.

An upper limit value of the water vapor partial pressure Pp is not limited to any particular value, and can be increased to, for example, nearly 100% of the total atmospheric pressure.

Further, at this time, it is preferred that a batch layer GBL and the foam layer BL cover 80% to 100%, more preferably 90% to 100%, still more preferably 95% to 100% of a surface of the molten glass Gm. The batch layer GBL corresponds to the glass raw materials Gr fed into the melting space 11 inside the melting furnace 10. The foam layer BL is formed along with the heating and melting of the glass raw materials Gr. Meanwhile, it is preferred that the batch layer GBL corresponding to the glass raw materials Gr fed into the melting space 11 inside the melting furnace 10 cover 30% to 70% of the surface of the molten glass Gm.

A covered area of the surface of the molten glass Gm with the foam layer BL and the batch layer GBL can be adjusted by, for example, changing the temperature in the melting space 11, more specifically, changing an amount of heat generation from the burner 20. When the amount of heat generation is increased by, for example, increasing the number of burners 20 or increasing the fuel, the temperature in the melting space 11 rises. As a result, the covered area of the surface of the molten glass Gm with the foam layer BL and the batch layer GBL is decreased.

As described above, with the manufacturing method for a glass article according to this embodiment, the glass raw materials Gr fed into the melting space 11 are heated and molten through the combustion of the hydrogen fuel FH in the melting step S1. Thus, carbon dioxide contained in the exhaust gas generated in the melting step S1 can be reduced. Further, in this melting step S1, the water vapor partial pressure Pp in the melting furnace 10 is set to more than 80% of the total atmospheric pressure Pt. Thus, the foam layer BL expands, resulting in a state in which the upper surface of the molten glass Gm is covered with a thick foam layer BL. The foam layer BL contains gas and provides high heat insulating action. Thus, heat dissipation from the upper surface of the molten glass Gm is effectively suppressed by the foam layer BL. Accordingly, the molten glass Gm can be efficiently heated by electric heating with the electrodes 38. As a result, electricity usage for the electric heating can be reduced.

It is preferred that a thickness dimension "t" of the foam layer BL formed along with heating and melting of the glass raw materials Gr be set to more than 50 mm as a maximum. An effective heat insulating effect of the foam layer BL can be fully exerted on the molten glass Gm by setting the thickness dimension "t" of the foam layer BL to more than 50 mm as a maximum. It is more preferred that the thickness dimension "t" of the foam layer BL be set to 70 mm or more as a maximum, still more preferably 90 mm or more. An upper limit thereof is, for example, 150 mm or less.

One embodiment of the present invention has been described above. However, the manufacturing method for a glass article according to the present invention is not limited to that described above in the embodiment, and various modifications are possible within the scope of the present invention.

### Example 1

Now, examples of the manufacturing method for a glass article according to the present invention is described. The following examples are mere exemplification, and the present invention is not limited to the following examples by any means.

In examples (Tests No. 2 to No. 4) according to the present invention, glass raw materials (glass raw materials of E-glass) were supplied into the melting furnace and were heated and molten in the melting furnace to generate a molten glass. At this time, the ingress of an atmosphere outside the melting furnace into the melting space was suppressed by creating a positive pressure in the melting space, and the water vapor partial pressure in the melting furnace was adjusted to 90%. An SO₃ content in the glass raw materials was changed within a range of from 300 wtppm to 1,000 wtppm.

Further, in a comparative example (Test No. 1), the water vapor partial pressure in the melting furnace was reduced to 70% by supplying the atmospheric air into the melting furnace.

In any of the tests, a flow rate of the glass raw materials to be fed was set constant, a flow rate of the hydrogen fuel supplied to the burners was set to 20 Nm³/h, and a flow rate of oxygen serving as the combustion-supporting gas was set to 10 Nm³/h. Further, electricity usage by the electrodes was adjusted so that the molten glass had a temperature of 1,240°C. In the melting furnace, 100% of the surface of the molten glass was covered with the batch layer and the foam layer. Under a steady state, a maximum thickness dimension of the foam layer and the electricity usage by the electrodes were measured. In Table 1, test conditions and the results of measurement are shown. The electricity usage in Table 1 is a relative value with respect to the electricity usage in Test No. 1 serving as a reference (100).

**[Table 1]**

| Test No. | Category | Water vapor partial pressure [%] | SO₃ content [wtppm] | Thickness of foam layer [mm] | Electricity usage |
|---|---|---|---|---|---|
| 1 | Comparative Example | 70 | 300 | 26 | 100 |
| 2 | Example | 90 | 300 | 60 | 85 |
| 3 | Example | 90 | 800 | 80 | 80 |
| 4 | Example | 90 | 1,000 | 120 | 60 |

From Table 1, in Test No. 2, the water vapor partial pressure in the melting furnace was set to more than 80% of the total atmospheric pressure. Thus, the maximum thickness dimension of the foam layer was increased to be larger than 50 mm, which was larger than that in Test No. 1 in which the water vapor partial pressure was set to 80% or less. As a result, in Test No. 2, the electricity usage was successfully reduced. Those results revealed that, when the water vapor partial pressure in the melting furnace was set to more than 80% of the total atmospheric pressure, heat dissipation from the upper surface of the molten glass was able to be effectively suppressed by the expanded foam layer and the electricity usage was able to be reduced.

In tests No. 3 and No. 4, the SO₃ content in the glass raw materials was increased to be larger than that in Test No. 2. As a result, in Tests No. 3 and No. 4, the maximum thickness dimension of the foam layer was increased to be larger than that in Test No. 2, and hence the electricity usage was successfully reduced. Those results revealed that, when the SO₃ content in the glass raw materials was increased, heat dissipation from the upper surface of the molten glass was able to be more effectively suppressed and the electricity usage was able to be further reduced.

### Reference Signs List

10 melting furnace
11 melting space
12a to 12e wall part
13 raw material supply device
14,15 heating device
16 feed port
17 screw feeder
18 discharge port
19 transfer tube
20 burner
21 fuel supply passage
22 hydrogen fuel pipe
23 hydrocarbon fuel pipe
24 combustion-supporting gas pipe
25,29,35 flow rate adjustment valve
26,30,34,36 switching valve
27,31 check valve
28 oxygen fuel source
32 hydrocarbon fuel source
33 common fuel pipe
37 oxygen source
38 electrode
39 partial pressure measurement device
40 pressure gauge
41 hygrometer
42 thermometer
43 computing device
BL foam layer
F flame
FC hydrocarbon fuel
FH hydrogen fuel
GBL batch layer
Gm molten glass
Gr glass raw material
t thickness dimension

## Claims

1. A manufacturing method for a glass article, the manufacturing method comprising a melting step of generating a molten glass by heating and melting glass raw materials corresponding to raw materials for a glass article, in a melting furnace,
wherein, in the melting step, the glass raw materials are heated and molten through combustion of fuel containing hydrogen and with electrodes arranged in the melting furnace, and a water vapor partial pressure in the melting furnace is set to more than 80% of a total atmospheric pressure.

2. The manufacturing method for a glass article according to claim 1, wherein the glass raw materials contain SO₃ at 200 wtppm or more.

3. The manufacturing method for a glass article according to claim 1 or 2, wherein, in the melting step, 80% to 100% of a surface of the molten glass is covered with a batch layer corresponding to the glass raw materials supplied into the melting furnace and a foam layer formed along with heating and melting of the glass raw materials.

4. The manufacturing method for a glass article according to claim 1 or 2, wherein a batch layer corresponding to the glass raw materials supplied into the melting furnace covers 30% to 70% of a surface of the molten glass.

5. The manufacturing method for a glass article according to claim 1 or 2, wherein, in the melting step, a maximum thickness dimension of a foam layer formed along with the heating and melting of the glass raw materials is set to more than 50 mm.
